# EUROPÄISCHE PATENTSCHRIFT

(11) **EP 2 387 807 B1**
(45) Veröffentlichungstag und Bekanntmachung des Hinweises auf die Patenterteilung: **02.01.2013**
(21) Anmeldenummer: 10701200.7
(22) Anmeldetag: 14.01.2010
(51) Int. Cl.: C08G 73/06

(54) **MONOMERPERLEN ZUR HERSTELLUNG EINER PROTONENLEITENDEN MEMBRAN**
MONOMER BEADS FOR PRODUCING A PROTON-CONDUCTING MEMBRANE
PERLES DE MONOMÈRE POUR LA PRODUCTION D'UNE MEMBRANE À CONDUCTION PROTONIQUE

(30) Priorität: 14.01.2009 EP 09000398
(43) Veröffentlichungstag der Anmeldung: 23.11.2011
(73) Patentinhaber: BASF SE, 67056 Ludwigshafen (DE)
(72) Erfinder: LEITNER, Klaus, 67059 Ludwigshafen (DE); NAWALADE, Sameer, 68159 Mannheim (DE)
(74) Vertreter: Mai, Dörr, Besier
(86) Internationale Anmeldenummer: PCT/EP2010/000165
(87) Internationale Veröffentlichungsnummer: WO 2010/081698

(56) Entgegenhaltungen:
- DE-A1- 10 117 686
- DE-A1- 10 235 357
- DE-A1- 10 242 708
- DE-A1-102006 042 760

## Beschreibung

Die vorliegende Erfindung betreffen neuartige Monomerperlen zur Herstellung einer protonenleitenden Polymermembran auf Basis von Polyazolen, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole, wie beispielsweise Polybenzimidazole (®Celazole), sind seit langem bekannt. Die Herstellung derartiger Polybenzimidazole (PBI) erfolgt üblicherweise durch Umsetzung von 3,3',4,4'-Tetraaminobiphenyl mit Terephthalsäure oder deren Estern in der Schmelze. Das entstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in einem weiteren Schritt in polaren, aprotischen Lösemitteln, wie beispielsweise Dimethylacetamid (DMAc), gelöst und eine Folie mittels klassischer Verfahren erzeugt.

Anschließend können die basischen Polyazol-Folien mit konzentrierter Phosphorsäure oder Schwefelsäure dotiert werden und wirken dann als Protonenleiter und Separatoren in sogenannten Polymerelektrolyt-Membran-Brennstoffzellen (PEM-Brennstoffzellen).

Die auf diese Weise erhältlichen, mit Säure dotierten Polymermembranen auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern.

WO 02/088219 schlägt daher die Verwendung einer protonenleitenden Polymermembran auf Basis von Polyazolen vor, die durch ein Verfahren erhältlich ist, umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.
D) Behandlung der in Schritt C) gebildeten Membran bis diese selbsttragend ist.

Jedoch ist eine solche Vorgehensweise relativ langwierig und aufwendig. Darüber hinaus ist die Polykondensation bzgl. der Reaktionsdauer nicht immer vollständig reproduzierbar, was häufig den Herstellungsprozess zusätzlich erschwert.

So wird beispielsweise für die Polykondensation von 3,3',4,4'-Tetraaminobiphenyl mit Terephthalsäure in Polyphosphorsäure üblicherweise eine Reaktionszeit größer 35 Stunden benötigt. Weiterhin muss eine exakte Stöchiometrie der beiden Monomere eingehalten werden, da sonst kein ausreichend hoher Molekulargewichtsaufbau stattfindet.

Ein weiteres Problem stellt die Notwendigkeit der frischen Vormischung der Monomere dar. Damit sich beide Monomere in der Polyphosphorsäure gleichermaßen gut verteilen, müssen sie in Pulverform vorgemischt und der Polyphosphorsäure als homogene Mischung zugesetzt werden. Dieses Vormischen muss jedoch für jede Charge separat erfolgen. Würde man größere Monomermischungen vorfertigen, würden sich die Monomere während der Lagerung entmischen.

Schließlich führen auch die unterschiedlichen Lösegeschwindigkeiten der Monomere zu zusätzlichen Problemen. Beim Einrühren und Auflösen der Monomermischung in der Polyphosphorsäure geht das 3,3',4,4'-Tetraaminobiphenyl wesentlich schneller in Lösung als die Terephthalsäure. Häufig wird dabei beobachtet, dass sich Monomerpulverreste am Rührer oder am Kessel ansammeln und somit der Reaktionslösung entzogen werden. Dies führt zu einem unstöchiometrischen Verhältnis der beiden Monomere in der Reaktionsmischung, welches wiederum den Molmassenaufbau bei der Polykondensation negativ beeinflusst.

Aufgabe der vorliegenden Erfindung war es daher, Möglichkeiten aufzuzeigen, wie das Verfahren zur Herstellung einer protonenleitenden Polymermembran auf Basis von Polyazolen weiter verbessert werden kann. Dabei wurde eine Vorgehensweise angestrebt, welche auf möglich einfache Art und Weise, großtechnisch und möglichst kostengünstig durchgeführt werden kann. Es sollte insbesondere möglichst kurze Reaktionszeiten und möglichst gleichmäßige und reproduzierbare Reaktionsverläufe erreicht werden. Weiterhin wurden eine bessere Skalierbarkeit des Reaktionsansatzes und die Herstellung von besonders einheitlichen Polymeren angestrebt.

Gelöst werden diese sowie weitere Aufgaben, die sich aus den einleitend diskutierten Zusammenhängen unmittelbar ableiten lassen, durch die Verwendung von Monomerperlen, die nach einem Verfahren mit allen Merkmalen des vorliegenden Patentanspruchs 1 erhältlich sind. Besonders zweckmäßige Abwandlungen des Verfahrens werden in den rückbezogenen Ansprüchen beschrieben. Weiterhin werden die auf diese Weise erhältlichen Monomerperlen sowie ihre Verwendung für die Herstellung einer protonenleitenden Polymermebran unter Schutz gestellt.

Dadurch, dass man Monomerperlen bereitstellt, die nach einem Verfahren erhältlich sind, bei welchem man
i. eine oder mehrere aromatische Tetra-Amino-Verbindungen mit einer oder mehreren aromatischen Carbonsäuren, die mindestens zwei Säuregruppen pro Carbonsäure-Monomer enthalten, in einem Extruder vermischt und bei 190°C-270°C aufschmilzt;
ii*.* die Schmelze bei 190°C-270°C über eine Düse, die sich am Extruderausgang befindet, vertropft;
iii. die flüssigen Tröpfchen auffängt, abkühlt und erstarren lässt,
gelingt es auf nicht ohne weiteres vorhersehbare Weise, das Verfahren zur Herstellung einer protonenleitenden Polymermembran auf Basis von Polyazolen deutlich zu verbessern. Dabei die erfindungsgemäße Lösung auf vergleichbar einfache Art und Weise, großtechnisch und äußerst kostengünstig realisiert werden. Es werden insbesondere deutlich kürzere Reaktionszeiten und überaus gleichmäßige und reproduzierbare Reaktionsverläufe erreicht. Weiterhin wird eine bessere Skalierbarkeit des Reaktionsansatzes und die Herstellung von besonders einheitlichen Polymeren ermöglicht.

Durch die Verwendung der erfindungsgemäßen Monomerperlen ergeben sich insbesondere die folgenden Vorteile:
➢ Die Monomere werden im Extruder homogen aufgeschmolzen und/oder in der Monomerschmelze homogen dispergiert, ohne dass sich die Monomere entmischen und/oder zersetzen. So schmilzt z. B. reines 3,3`,4,4`-Tetraaminobiphenyl bei ca. 176°C und lässt sich problemlos schmelzen. Terephthalsäure zeigt hingegen keinen Schmelzpunkt, sondern eine Zersetzung im Temperaturbereich von 300°C bis 400 °C. Im Extruder wird somit das 3,3`,4,4`-Tetraaminobiphenyl aufgeschmolzen und die Terephthalsäure in der 3,3`,4,4`-Tetraaminobiphenyl-Schmelze homogen dispergiert, ohne dass es sich entmischt oder zersetzt.
➢ Es können in Form der Monomerperlen größere Menge an Monomermischungen vorgefertigt und gelagert werden, ohne dass wie im Falle der pulverförmigen Monomermischung eine Entmischung der Monomere in den Lagergebinden befürchtet werden muss.
➢ Durch die glasartige Struktur und die glatte Oberfläche der im Extruder hergestellten Monomerperlen entstehen keine Stäube, es wird somit insbesondere auch die 3,3',4,4'-Tetraaminobiphenyl-Staubentwicklung vermieden. Da feine Stäube leicht eingeatmet werden können und der Verdacht besteht, dass aromatische Tetra-Amino-Verbindungen, wie z. B. 3,3',4,4'-Tetraaminobiphenyl, möglicherweise krebserregend sind, bedeutet dies einen enormen Gewinn an Sicherheit in der Produktion.
➢ Es wurde nachgewiesen, dass pulverförmige Tetra-Amino-Verbindungen/aromatische Carbonsäure-Mischungen, wie z. B. 3,3',4,4'-Tetraaminobiphenyl/Terephthalsäure-Mischungen, staubexplosiv sind. Da bei der Verwendung der Monomerperlen keine Staubbildung auftritt, wird die Staubexplosionsgefahr vermieden.
➢ Es hat sich in der Praxis gezeigt, dass sich Tetra-Amino-Verbindungen/aromatische Carbonsäure-Pulvermischungen, wie z. B. 3,3',4,4'-TetraaminobiphenyUTerephthalsäure-Pulvermischungen, schnell und stark elektrostatisch aufladen und an Pulvertrichtern, Kesselwänden, Gefäßen usw. haften bleiben. Dies führt zu einem Fehler beim Einwiegen der Edukte und zu einem erhöhten Aufwand bei der Reinigung. Bei der Verwendung der erfindungsgemäßen Monomerperlen treten diese Probleme nicht auf, da sich keine Stäube bilden.
➢ Es zeigt sich weiterhin, dass die Polykondensation der erfindungsgemäßen Monomerperlen schneller abläuft als die Polykondensation einer pulverförmigen Monomermischung.
➢ Reste von Monomerperlen, die sich möglicherweise während der Polykondensationsreaktion am Rührer oder an anderer Stelle sammeln und nicht in die Reaktionsmischung einbringen lassen, führen weniger leicht zu Unstöchiometrien, da dem Reaktionsgemisch alle Monomere im gleichen Verhältnis entzogen werden.

Die erfindungsgemäßen Monomerperlen umfassen eine oder mehrere aromatische Tetra-Amino-Verbindungen und eine oder mehrere aromatischen Carbonsäuren. Sie sind nach einem Verfahren erhältlich, bei welchem man
i. eine oder mehrere aromatische Tetra-Amino-Verbindungen mit einer oder mehreren aromatischen Carbonsäuren, die mindestens zwei Säuregruppen pro Carbonsäure-Monomer enthalten, in einem Extruder vermischt und bei 190°C-270°C, bevorzugt 200°C-250°C, besonders bevorzugt 220°C-245°C, insbesondere 230°C-kleiner 240°C, aufschmilzt;
ii*.* die Schmelze bei 190°C-270°C, bevorzugt 200°C-250°C, besonders bevorzugt 220°C-245°C, insbesondere 230°C-kleiner 240°C, über eine Düse, die sich am Extruderausgang befindet, vertropft;
iii. die flüssigen Tröpfchen auffängt, abkühlt und erstarren lässt.

Dabei kann die Extrusion der Monomermischung auf an sich bekannte Weise erfolgen.

Die Verweilzeit der Mischung aus Tetra-Amino-Verbindungen und Carbonsäuren im Extruder wird möglichst gering gewählt, um eine unerwünschte Präpolymerbildung bestmöglich zu vermeiden. Besonders bewährt haben sich mittlere Verweilzeiten kleiner 10 Minuten, günstigerweise kleiner 5 Minuten, insbesondere kleiner 1 Minute. Die mittlere Verweilzeit ergibt sich in diesem Zusammenhang aus dem Quotienten aus dem freien Volumen des Extruders und dem Materialdurchsatz pro Zeiteinheit.

Die Schneckengeometrie und die Länge der Extruderschnecke werden vorzugsweise derart gewählt, dass die Verweilzeit der Mischung im Extruder auf ein Minimum reduziert wird. Besonders bewährt hat sich insbesondere die Verwendung von Extrudern, die eine einfache Schnecke und möglichst keine Knetelemente aufweisen.

Die Innen-Temperatur des Extruders wird vorzugsweise so eingestellt, dass einerseits ein vollständiges Aufschmelzen der Mischung aus Tetra-Amino-Verbindungen und Carbonsäuren gewährleistet ist, jedoch andererseits eine Präpolykondensatbildung möglichst unterdrückt wird. Bevorzugt werden Innen-Temperaturen von mindestens 200°C, bevorzugt im Bereich von größer 210°C bis kleiner 270°C, besonders bevorzugt im Bereich von größer 220°C bis kleiner 250°C, insbesondere im Bereich von 230°C bis kleiner 240°C.

Der Durchsatz der zu extrudierenden Mischung aus Tetra-Amino-Verbindungen und Carbonsäuren und die Düse werden vorzugsweise aufeinander abgestimmt, damit sich entsprechende Tröpfchen in erwünschter Größe bilden. Besonders bevorzugt werden Monomerperlen mit einem Durchmesser im Bereich von 1 bis 5 mm, insbesondere 2-3 mm.

Zu geringe Düsendurchmesser limitieren den Durchsatz und neigen zur Verstopfung. Im Rahmen einer bevorzugten Ausführungsform der vorliegenden Erfindung werden die Düse oder der Düsenkopf beheizt, damit die Schmelze nicht bereits in der Düse auskühlen und somit erstarren kann. Besonders bevorzugte Durchmesser der Düse liegen im Bereich von 0,3 mm bis 10 mm, insbesondere im Bereich von 2 mm bis 5 mm.

Die Erfahrung hat weiterhin gezeigt, dass die Düse so nahe wie möglich am Extruder platziert werden sollte; zu lange Leitungen zwischen Extruder und Düse führen zu langen Verweilzeiten in den Leitungen und begünstigen die ungewünschte Präpolymerbildung in der Leitung.

Im Rahmen der vorliegenden Erfindung wird die Schmelze vorzugsweise in eine inerte Flüssigkeit vertropft, d.h. in eine Flüssigkeit, die unter den gegebenen Umständen nicht mit den Bestandteilen der Schmelze reagiert. Bevorzugt wird die Schmelze in eine Flüssigkeit vertropft, die bis 250°C thermisch stabil ist und die sich vorzugsweise nachträglich durch Waschen mit lipophilen Lösungsmitteln von den Monomerperlen möglichst vollständig entfernen lässt. Die Verwendung von Mineralölen, insbesondere von Weißölen (Paraffinölen), hat sich hierbei ganz besonders bewährt.

Anschließend werden die erstarrten Perlen zweckmäßiger Weise mit einem inerten Lösungsmittel gewaschen, um eventuell anhaftende Substanzen, wie z. B. die inerte Flüssigkeit, zu entfernen, und dann getrocknet, um ggf. anhaftendes Lösungsmittel zu entfernen. Geeignete Lösungsmittel umfassen u. a. unpolare Lösungsmittel, die weder Tetra-Amino-Verbindungen noch Carbonsäuren in signifikanten Mengen lösen. Dies sind besonders Lösungsmittel mit geringem Dipolmoment (<3 × 10⁻³⁰ Cm] und geringer Dipolkonstante (<3), jeweils gemessen bei 25°C. Besonders geeignete Lösungsmittel sind weiterhin Cyclohexan, Pentan, Hexan, Heptan, Benzol und Toluol.

Die Trocknung erfolgt vorzugsweise im Vakuum-Trockenschrank bei Temperaturen zwischen Raumtemperatur und ca. 150°C, bevorzugt zwischen 40°C und 80°C. Sie dient lediglich der möglichst quantitativen Verdampfung der Waschflüssigkeit.

Alternativ zum Vertropfen in eine Flüssigkeit kann auch in einem Fallturm (Vertropferturm) vertropft werden. Dies hat den Vorteil, dass anschließend kein Öl von den Perlen entfern werden muss. Die Fallstrecke wird vorzugsweise derartig gewählt, dass die Perlen vor dem Auftreffen am Boden vollständig erstarrt sind. Besonders bewährt haben sich Fallstrecken von mehreren Metern, insbesondere von 2 m bis 10 m.

Bei den erfindungsgemäß eingesetzten aromatischen und/oder heteroaromatischen Tetraaminoverbindungen handelt es sich vorzugsweise um 3,3',4,4'-Tetraaminobiphenyl, 2,3,5,6-Tetraaminopyridin, 1,2,4,5-Tetraaminobenzol, 3,3`,4,4'-Tetraaminodiphenylsulfon, 3,3',4,4'-Tetraaminodiphenylether, 3,3`,4,4'-Tetraaminobenzophenon, 3,3',4,4'-Tetraaminodiphenylmethan und/oder 3,3',4,4'-Tetraaminodiphenyldimethylmethan.

Bei den erfindungsgemäß eingesetzten aromatischen Carbonsäuren handelt es sich bevorzugt um Dicarbonsäuren, Tricarbonsäuren und/oder Tetracarbonsäuren, insbesondere um Dicarbonsäuren. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure, 3,4-Dihydroxyphthatsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure und/oder 4-Carboxyzimtsäure.

Bei den aromatischen Tricarbonsäuren handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure und/oder 3,5,4'-Biphenyltricarbonsäure.

Bei den aromatischen Tetracarbonsäuren handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure.

Bei den erfindungsgemäß eingesetzten heteroaromatischen Carbonsäuren handelt es sich bevorzugt um heteroaromatische Dicarbonsäuren, Tricarbonsäuren und/oder Tetracarbonsäuren, insbesondere Dicarbonsäuren. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure, 2,5-Pyrazindicarbonsäure, 2.,4,6-Pyridintricarbonsäure und/oder Benzimidazol-5,6-dicarbonsäure.

Der Gehalt an Tricarbonsäuren und/oder Tetracarbonsäuren, bezogen auf eingesetzte Dicarbonsäuren, beträgt bevorzugt zwischen 0 und 30 Mol-%, vorzugsweise 0,1 und 20 Mol %, insbesondere 0,5 und 10 Mol-%.

Bevorzugt werden in Schritt i. Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt bevorzugt zwischen 1:99 und 99:1, vorzugsweise 1:50 bis 50:1.

Bei diesen Mischungen handelt es sich bevorzugt um Mischungen von N-heteroaromatischen Dicarbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure und 2,5-Pyrazindicarbonsäure.

Die erfindungsgemäßen Monomerperlen zeichnet sich vorzugsweise dadurch aus, dass das Verhältnis der von den Tetra-Amino-Verbindungen abgeleiteten Aminogruppen zu den von den aromatischen Carbonsäuren abgeleiteten Carbonsäuregruppen im Bereich von 2,1:1 bis 1,9:1 liegt.

Weiterhin ist der Anteil von Oligomeren oder Polymeren in den Monomerperlen möglichst gering. Bevorzugt ist der molare Anteil von Amidgruppen und/oder Imidgruppen, bezogen auf die Gesamtzahl aller Aminogruppen vorzugsweise kleiner 1:1, zweckmäßigerweise kleiner 0,5:1, besonders bevorzugt kleiner 0,33:1, noch mehr bevorzugt kleiner 0,2:1, insbesondere kleiner 0,1:1.

Ferner ist der Polymerisationsgrad der Mischung möglichst niedrig. Der zahlenmittlere Polymerisationsgrad der Monomerperlen, gemessen mittels Gelpermeationschromatographie, ist vorzugsweise kleiner 10, bevorzugt kleiner 5, zweckmäßigerweise kleiner 4, noch mehr bevorzugt kleiner 3, insbesondere kleiner 2.

Die erfindungsgemäßen Monomerperlen eignen sich insbesondere zur Herstellung einer protonenleitende Polymermembran auf Basis von Polyazolen. Besonders bewährt hat sich in diesem Zusammenhang eine Vorgehensweise, umfassend die Schritte
A) Mischen der Monomerperlen mit Polyphosphorsäure unter Ausbildung einer Lösung und/oder Dispersion,
B) Aufbringen einer Schicht unter Verwendung der Mischung gemäß Schritt A) auf einem Träger,
C) Erwärmen des flächigen Gebildes/Schicht, erhältlich gemäß Schritt B), auf Temperaturen von bis zu 350°C, vorzugsweise bis zu 280°C unter Ausbildung des Polyazol-Polymeren,
D) Behandlung der in Schritt C) gebildeten Membran in Gegenwart von Feuchtigkeit bei Temperaturen und für eine Dauer, ausreichend bis diese selbsttragend ist.

Die Durchführung des Schrittes A) erfolgt bevorzugt bei einer Temperatur im Bereich von 25°C bis kleiner 100°C für 0,1 Stunden bis 10 Stunden.

Bei der in Schritt A) verwendeten Polyphosphorsäure handelt es sich um handelsübliche Polyphosphorsäuren, wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 80%, besonders bevorzugt von mindestens 83%. Anstelle einer Lösung der Monomeren kann auch eine Dispersion/Suspension erzeugt werden.

Die in Schritt A) erzeugte Mischung weist bevorzugt ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure, insbesondere mit konz. Phosphorsäure, 85%, versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 µm und 4000 µm, vorzugsweise zwischen 30 µm und 3500 µm, insbesondere zwischen 50 µm und 3000 µm.

Die Polymerisation erfolgt in Schritt C). Hierzu wird die Mischung auf eine Temperatur von bis zu 350°C, vorzugsweise von bis zu 280°C, insbesondere von bis zu 250°C erhitzt. Die Mischung wird vorzugsweise in einem geschlossenen Reaktor erhitzt. In einer Variante kann das durch die Polykondensation gebildete Wasser ganz oder teilweise entfernt werden. Dies kann durch Abtrennung des Wassers oder durch Verwendung von Anhydriden bewirkt werden.

Das in Schritt C) gebildete Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 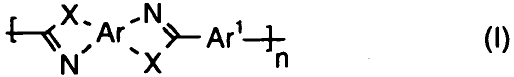 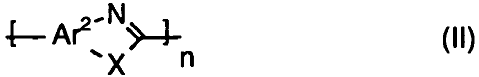 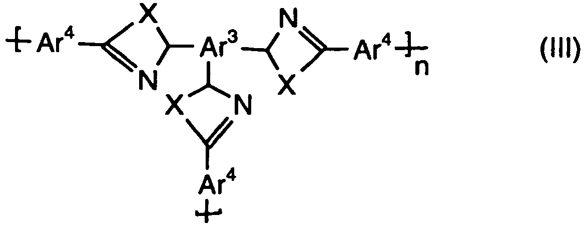 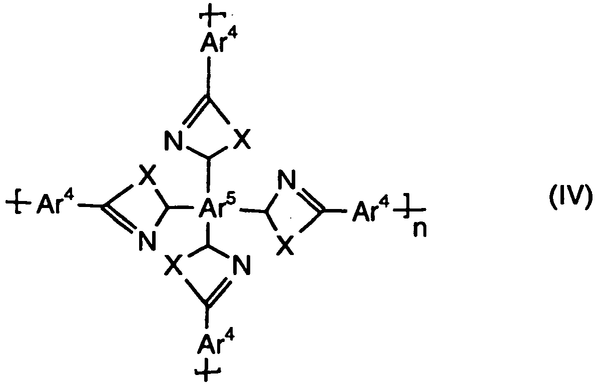 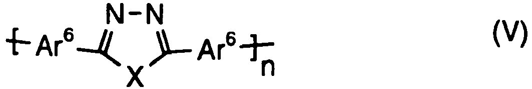 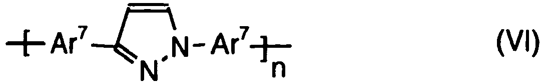 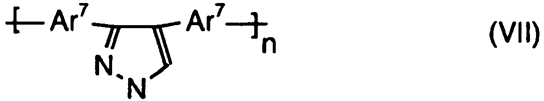 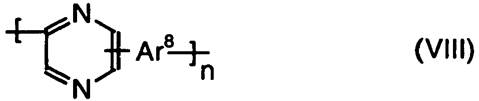 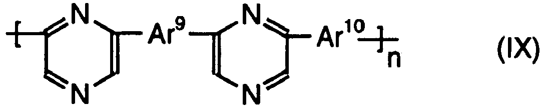 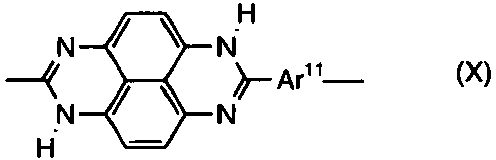 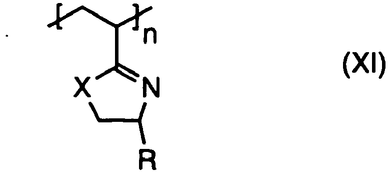 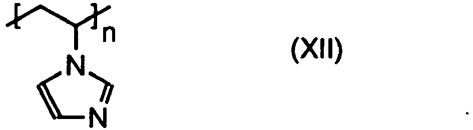 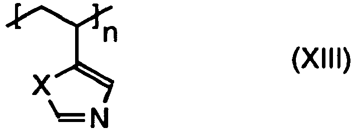 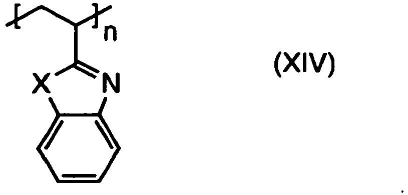 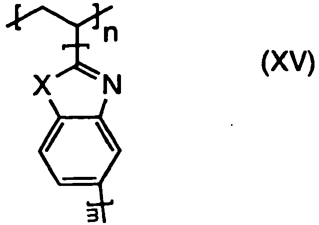 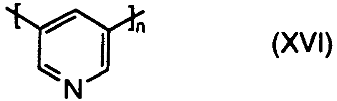 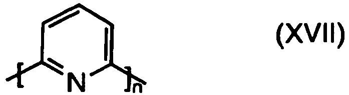 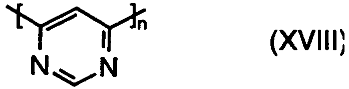 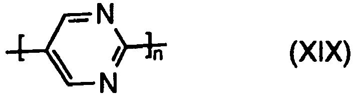 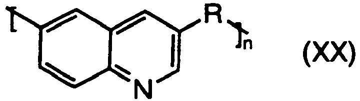 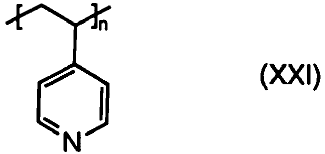 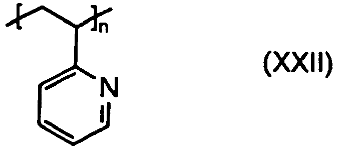 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht, mit der Maßgabe, dass R in Formel (XX) nicht Wasserstoff ist, und
n, m eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 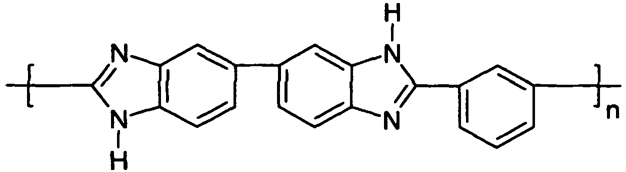 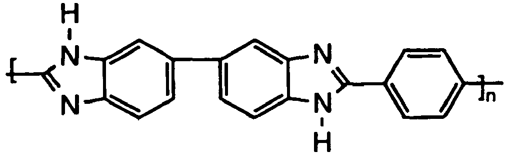 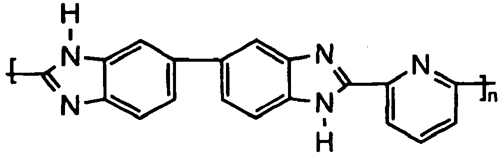 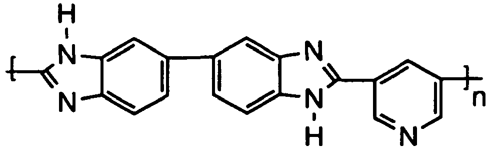 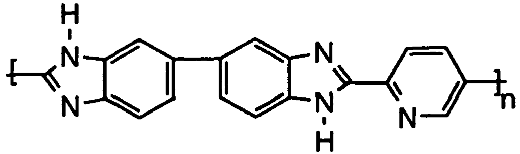 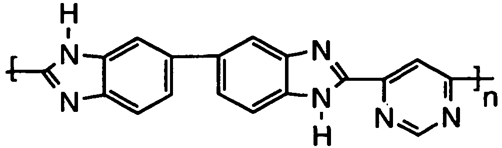 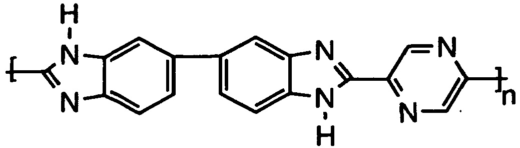 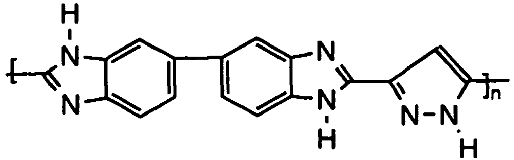 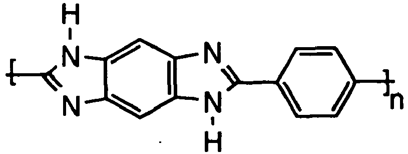 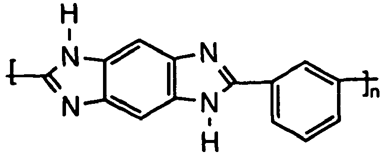 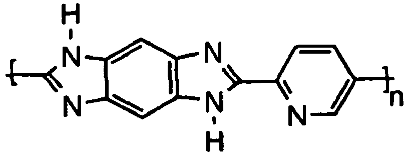 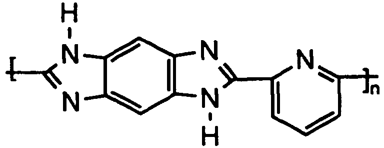 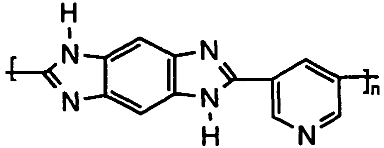 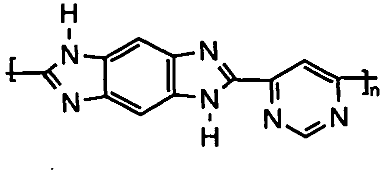 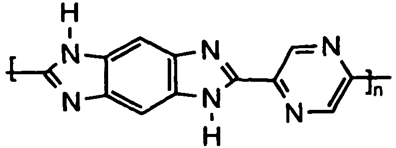 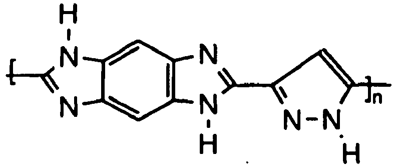 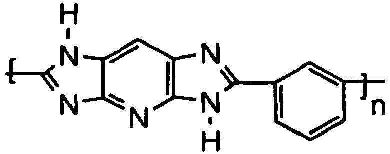 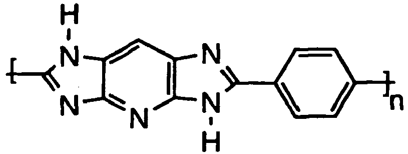 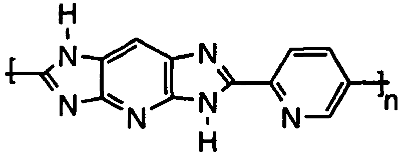 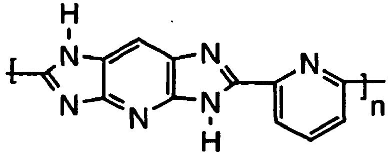 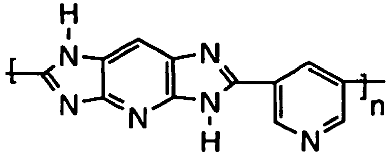 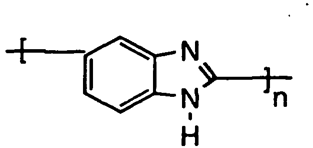 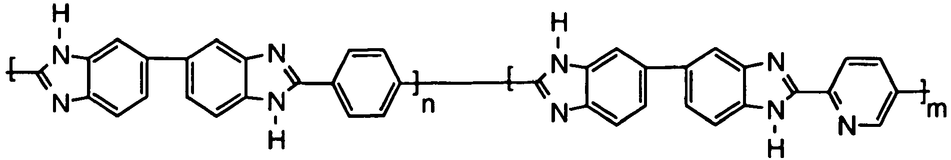 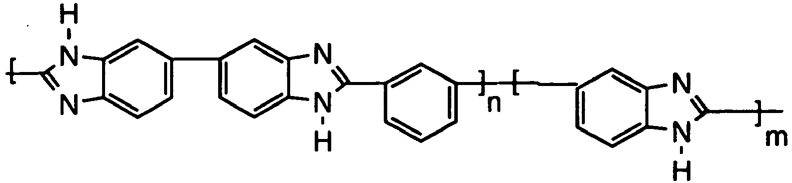 wobei n und m eine ganze Zahl größer gleich 10, vorzugsweise größer gleich 100 ist.

Die mittels des beschriebenen Verfahrens erhältlichen Polyazole, insbesondere jedoch die Polybenzimidazole zeichnen sich durch ein hohes Molekulargewicht aus. Gemessen als Intrinsische Viskosität beträgt diese bevorzugt mindestens 1,4 dl/g und liegt somit deutlich über dem von handelsüblichem Polybenzimidazol (IV < 1,1 dl/g).

Insofern die Monomerperlen in Schritt A) auch Tricarbonsäuren und/oder Tetracarbonsäuren enthalten, wird hierdurch eine Verzweigung/Vernetzung des gebildeten Polymeren erzielt. Diese trägt zur Verbesserung der mechanischen Eigenschaft der gebildeten Membran bei.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Es hat sich weiterhin gezeigt, dass bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure,2,5-Pyrazindicarbonsäure. die Temperatur in Schritt C) - oder falls die Bildung von Oligomeren und/oder Polymeren bereits in Schritt A) gewünscht wird - im Bereich von bis zu 300°C, vorzugsweise zwischen 100°C und 250°C, günstig ist.

Die Behandlung der Membran in Schritt D) erfolgt bevorzugt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit oder Wasser und/oder Wasserdampf und/oder wasserhaltiger Phosphorsäure mit einer Konzentration von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und bevorzugt zur Ausbildung einer Membran mit einer Dicke zwischen 15 µm und 3000 µm, vorzugsweise zwischen 20 µm und 2000 µm, insbesondere zwischen 20 µm und 1500 µm, die selbsttragend ist.

Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet. Der zudem stattfindende Sol/Gel-Übergang führt zur Ausbildung der besonderen Membranstruktur.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Besonders bevorzugt in diesem Zusammenhang wird ein Dampf mit einer Temperatur von bis zu 180°C, besonders bevorzugt bis zu 150°C. Wesentlich für die Temperaturobergrenze ist die Dauer der Behandlung.

Die partielle Hydrolyse (Schritt D) kann auch in Klimakammern erfolgen, wobei unter definierter Feuchtigkeitseinwirkung die Hydrolyse gezielt gesteuert werden kann. Hierbei kann die Feuchtigkeit durch die Temperatur oder die Sättigung der kontaktierenden Umgebung, beispielsweise Gase, wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40%-80% durchgeführt, beträgt die Behandlungsdauer bevorzugt zwischen 1 Stunde und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosphorsäure bezogen auf eine Wiederholeinheit der Formel (III), z.B. Polybenzimidazol) zwischen 10 und 50, insbesondere zwischen 12 und 40, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluss an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR oder NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei bevorzugt zwischen 5 kGy und 200 kGy.

Die erfindungsgemäß erhältliche Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder in Schritt A oder B erfolgen oder nach der Polymerisation

Nicht limitierende Beispiele für protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃. H₂MoO₄ |

| | |
|---|---|
| Selenite und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂, |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Als weiteres kann diese Membran auch perfluorierte Sulfonsäureadditive (0,1-20 wt%, bevorzugt 0,2-15 wt%, ganz bevorzugt 0,2- 10 wt%) enthalten. Diese Additive führen zur Leistungsverbesserung, in der Nähe der Kathode zur Erhöhung der Sauerstofflöslichkeit und Sauerstoffdiffusion und zur Verringerung der Adsorption von Phosphorsäure und Phosphat an Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind:
Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch Additive enthalten, die die im Betrieb bei der Sauerstoffreduktion erzeugten Peroxidradikale abfangen (primäre Anitoxidanzien) oder zerstören (sekundäre Antioxidanzien) und dadurch, wie in JP2001118591 A2 beschrieben, Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.

Nicht limitierende Beispiele für solche Additive sind:
Bis(trifluormethyl)nitroxid, 2,2-Diphenyl-1-pikrinylhydrazyl, Phenole, Alkylphenole, sterisch gehinderte Alkylphenole, wie zum Beispiel Irganox, aromatische Amine, sterisch gehinderte Amine, wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite, wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise für Membran-Elektroden-Einheiten für Brennstoffzellen verwendet.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muss. Auch eine solche Membran ist Gegenstand der vorliegenden Erfindung.

Nachfolgend wird die Erfindung durch ein Beispiel weiter veranschaulicht, ohne dass hierdurch eine Beschränkung des Erfindungsgedankens erfolgen soll.

### Beispiel

Mittels eines Gleichdrallschneckenextruders wurde eine stöchiometrische Mischung von 3,3`,4,4`-Tetraaminobiphenyl (TAB) und Terephthalsäure (TPA) kontinuierlich extrudiert.

Die Extrusionsbedindungen waren dabei wie folgt:
- Schneckenlänge: 400 mm
- Düsenöffnung: 5 mm
- Einzug der Materialien bei Raumtemperatur (25°C)
- Solltemperatur des Extruders: 230°C
- Moment an der Düse: 1,9 Nm
- Drehzahl: 100 U/min
- Durchsatz: 0,8 kg/h
- Keine Verwendung von Knetelementen

Die Extrusion wurde wie folgt durchgeführt:

Der Extruder wurde auf 230°C erwärmt. Zunächst wurde reines TAB zugeführt. Dann wurde das Zuführverhältnis von TAB von 100% auf 50 % langsam erniedrigt, indem man TPA zugab. Der langsame Übergang von 100% auf 50 % verringerte die Verweilzeit der Blendmischung (50:50) im Extruder und reduzierte auf diese Weise das Risiko einer Polymerisation im Extruder.

Die geschmolzenen Tropfen wurden in einem Öl aufgefangen, das mit einem Magnetrührer gerührt wurde. Das Öl konnte durch Waschen mit Cyclohexan von den resultierenden Perlen entfernt werden.

Die Perlen wiesen einen Durchmesser im Bereich von 2 bis 3 mm auf und konnten leicht transportiert und weiterverarbeitet werden.

## Patentansprüche

1. Verfahren zur Herstellung von Monomerperlen, bei welchem man
i. eine oder mehrere aromatische Tetra-Amino-Verbindungen mit einer oder mehreren aromatischen Carbonsäuren, die mindestens zwei Säuregruppen pro Carbonsäure-Monomer enthalten, in einem Extruder vermischt und bei 190°C-270°C aufschmilzt;
ii. die Schmelze bei 190°C-270°C über eine Düse, die sich am Extruderausgang befindet, vertropft;
iii. die flüssigen Tröpfchen auffängt, abkühlt und erstarren lässt.

2. Verfahren nach Anspruch 1, **dadurch gekennzeichnet, dass** die mittlere Verweilzeit der Mischung aus Tetra-Amino-Verbindungen und Carbonsäuren im Extruder kleiner 10 Minuten ist.

3. Verfahren nach Anspruch 1 oder 2, **dadurch gekennzeichnet, dass** man die Mischung bei einer Temperatur im Bereich von 200°C bis 250°C aufschmilzt.

4. Verfahren nach mindestens einem der vorangehenden Ansprüche, **dadurch gekennzeichnet, dass** man die Schmelze in eine inerte Flüssigkeit, vorzugsweise Mineralöl, tropft.

5. Verfahren nach Anspruch 4, **dadurch gekennzeichnet, dass** man die erstarrten Perlen mit einem inerten Lösungsmittel, vorzugsweise Cyclohexan, Pentan, Hexan, Heptan, Benzol und/oder Toluol, wäscht und trocknet, bevorzugt bei einer Temperatur im Bereich von 25°C bis 150°C.

6. Verfahren gemäß mindestens einem der vorangehenden Ansprüche, **dadurch gekennzeichnet, dass** man als aromatische Tetra-Amino-Verbindungen 3,3',4,4'-Tetraaminobiphenyl, 2,3,5,6-Tetraaminopyridin, 1,2,4,5-Tetraaminobenzol, 3,3',4,4`-Tetraaminodiphenylsulfon, 3,3',4,4'-Tetraaminodiphenylether, 3,3`,4,4`-Tetraaminobenzophenon, 3,3',4,4'-Tetraaminodiphenylmethan und/oder 3,3',4,4'-Tetraaminodiphenyldimethylmethan einsetzt.

7. Verfahren gemäß mindestens einem der vorangehenden Ansprüche, **dadurch gekennzeichnet, dass** man als aromatische Dicarbonsäuren Isophthalsäure, Terephthalsäure, Phthalsäure, 5-Hydroxyisophthalsäure, 4-Hydroxyisophthalsäure, 2-Hydroxyterephthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäüre, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure und/oder 4-Carboxyzimtsäure einsetzt.

8. Verfahren gemäß Anspruch 7, **dadurch gekennzeichnet, dass** der Gehalt an Tricarbonsäuren und/oder Tetracarbonsäuren, bezogen auf die eingesetzten Dicarbonsäuren, zwischen 0,1 Mol % und 20 Mol % beträgt.

9. Verfahren gemäß mindestens einem der vorangehenden Ansprüche, **dadurch gekennzeichnet, dass** man als Carbonsäuren heteroaromatische Dicarbonsäuren, Tricarbonsäuren und/oder Tetracarbonsäuren einsetzt, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6-Pyrimidindicarbonsäure,2,5-Pyrazindicarbonsäure, 2,4,6-Pyridintricarbonsäure und/oder Benzimidazol-5,6-dicarbonsäure.

10. Monomerperlen, umfassend eine oder mehrere aromatische Tetra-Amino-Verbindungen und eine oder mehrere aromatischen Carbonsäuren, erhältlich nach einem Verfahren der vorangehenden Ansprüche.

11. Monomerperlen nach Anspruch 10, **dadurch gekennzeichnet, dass** das Verhältnis der von den Tetra-Amino-Verbindungen abgeleiteten Aminogruppen zu den von den aromatischen Carbonsäuren abgeleiteten Carbonsäuregruppen im Bereich von 2,1:1 bis 1,9:1 liegt.

12. Monomerperlen nach Anspruch 10 oder 11, **dadurch gekennzeichnet, dass** der molare Anteil von Amidgruppen und/oder Imidgruppen, bezogen auf die Gesamtzahl aller Aminogruppen kleiner 1:1 ist.

13. Monomerperlen nach Anspruch 10, 11 oder 12, **dadurch gekennzeichnet, dass** sie einen zahlenmittleren Polymerisationsgrad, gemessen mittels GPC, kleiner 10 aufweisen.

14. Verwendung von Monomerperlen nach Anspruch 10, 11, 12 oder 13 zur Herstellung einer protonenleitende Polymermembran auf Basis von Polyazolen.

15. Verfahren zur Herstellung einer protonenleitende Polymermembran auf Basis von Polyazolen, umfassend die Schritte
A) Mischen der Monomerperlen nach Anspruch 10, 11, 12 oder 13 mit Polyphosphorsäure unter Ausbildung einer Lösung und/oder Dispersion,
B) Aufbringen einer Schicht unter Verwendung der Mischung gemäß Schritt A) auf einem Träger,
C) Erwärmen des flächigen Gebildes/Schicht, erhältlich gemäß Schritt B), auf Temperaturen von bis zu 350°C, vorzugsweise bis zu 280°C unter Ausbildung des Polyazol-Polymeren,
D) Behandlung der in Schritt C) gebildeten Membran in Gegenwart von Feuchtigkeit bei Temperaturen und für eine Dauer, ausreichend bis diese selbsttragend ist.

16. Verfahren gemäß mindestens einem der Ansprüche 15, **dadurch gekennzeichnet, dass** in Schritt C) ein Polymere, enthaltend wiederkehrende Benzimidazoleinheiten der Formel 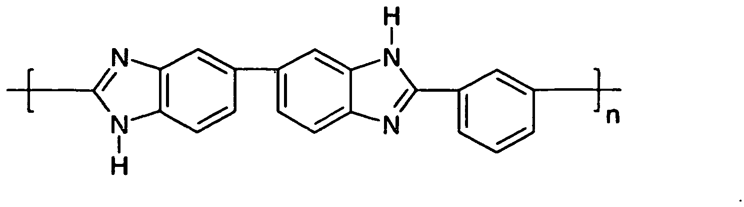 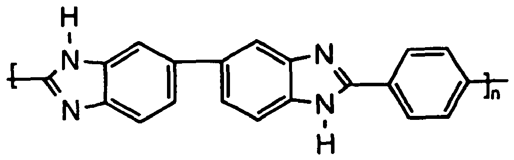 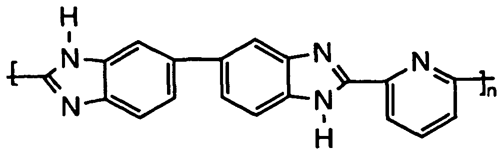 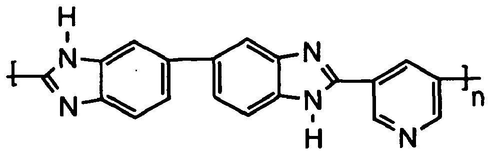 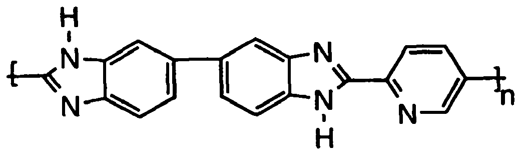 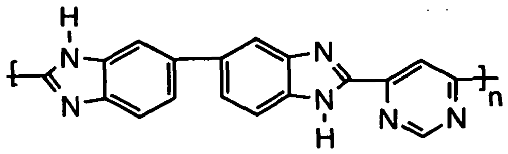 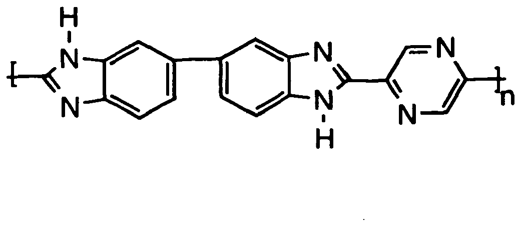 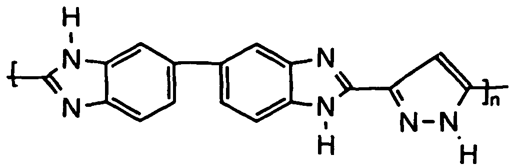 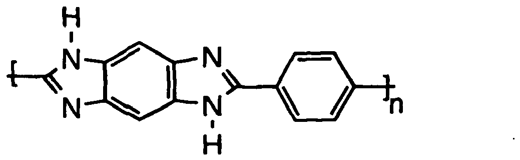 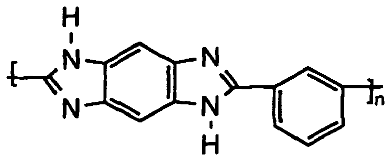 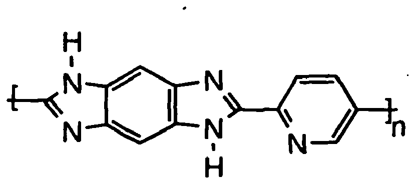 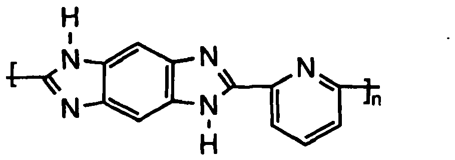 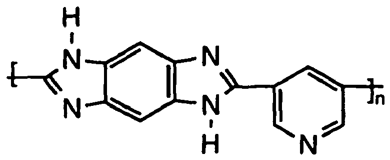 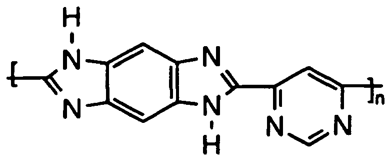 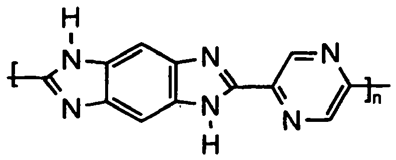 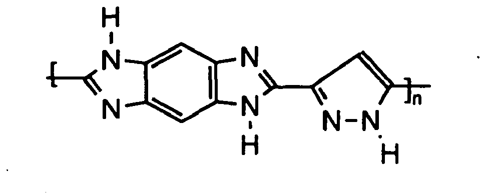 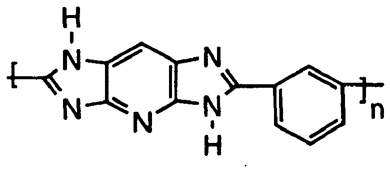 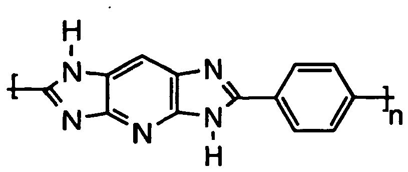 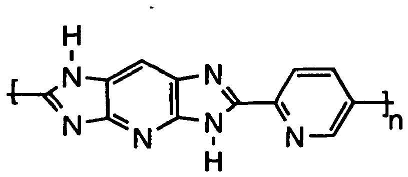 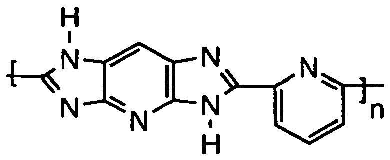 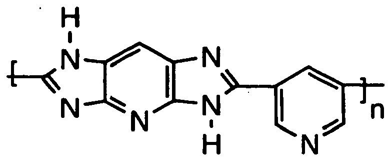 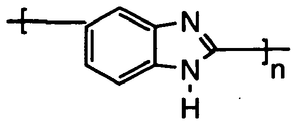 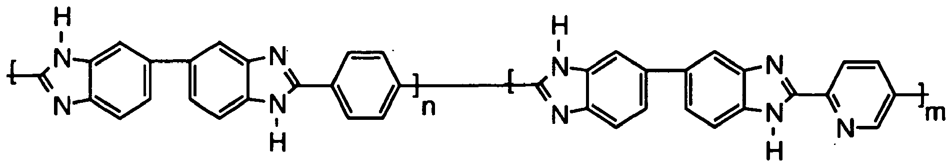 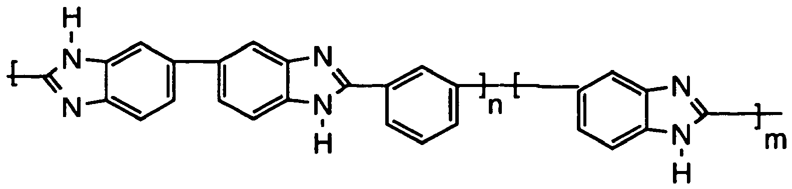 wobei n und m eine ganze Zahl größer gleich 10, vorzugsweise größer gleich 100 ist, gebildet wird.

17. Verfahren gemäß mindestens einem der Ansprüche 15 bis 16, **dadurch gekennzeichnet, dass** nach Schritt B) und vor Schritt C) die Viskosität durch Zugabe von Phosphorsäure eingestellt wird.

18. Verfahren gemäß mindestens einem der Ansprüche 15 bis 17, **dadurch gekennzeichnet, dass** die gemäß Schritt C) erzeugte Membran in Gegenwart von Feuchtigkeit bei Temperaturen und für eine Zeitdauer behandelt wird, bis die Membran selbsttragend ist und ohne Beschädigung vom Träger abgelöst werden kann.

19. Verfahren gemäß mindestens einem der Ansprüche 15 bis 18, **dadurch gekennzeichnet, dass** in Schritt B) als Träger eine Elektrode gewählt wird und die Behandlung gemäß Schritt D) dergestalt ist, dass die gebildete Membran nicht mehr selbsttragend ist.

## Claims

1. A process for producing monomer beads, wherein
i. one or more aromatic tetraamino compounds are mixed with one or more aromatic carboxylic acids comprising at least two acid groups per carboxylic acid monomer in an extruder and melted at 190°C-270°C;
ii. the melt is dropletized at 190°C-270°C by means of a die located at the extruder outlet;
iii. the liquid droplets are collected, cooled and allowed to solidify.

2. The process according to claim 1, wherein the average residence time of the mixture of tetraamino compounds and carboxylic acids in the extruder is less than 10 minutes.

3. The process according to claim 1 or 2, wherein the mixture is melted at a temperature in the range from 200°C to 250°C.

4. The process according to at least one of the preceding claims, wherein the melt is dripped into an inert liquid, preferably mineral oil.

5. The process according to claim 4, wherein the solidified beads are washed with an inert solvent, preferably cyclohexane, pentane, hexane, heptane, benzene and/or toluene, and dried, preferably at a temperature in the range from 25°C to 150°C.

6. The process according to at least one of the preceding claims, wherein 3,3`,4,4`-tetraaminobiphenyl, 2,3,5,6-tetraaminopyridine, 1,2,4,5-tetraaminobenzene, bis(3,4-diaminophenyl) sulfone, bis(3,4-diaminophenyl) ether, 3,3`,4,4`-tetraaminobenzophenone, 3,3`,4,4`-tetraaminodiphenylmethane and/or 3,3',4,4'-tetraaminodiphenyldimethylmethane are used as aromatic tetraamino compounds.

7. The process according to at least one of the preceding claims, wherein isophthalic acid, terephthalic acid, phthalic acid, 5-hydroxyisophthalic acid, 4-hydroxyisophthalic acid, 2-hydroxyterephthalic acid, 2,5-dihydroxy-terephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid,1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, bis(4-carboxyphenyl) ether, benzophenone-4,4'-dicarboxylic acid, bis(4-carboxyphenyl) sulfone, biphenyl-4,4'-dicarboxylic acid, 4-trifluoromethylphthalic acid, 2,2-bis(4-carboxyphenyl)hexafluoropropane, 4,4'-stilbenedicarboxylic acid and/or 4-carboxycinnamic acid are used as aromatic dicarboxylic acids.

8. The process according to claim 7, wherein the content of tricarboxylic acids and/or tetracarboxylic acids, based on the dicarboxylic acids used, is in the range from 0.1 mol% to 20 mol%.

9. The process according to at least one of the preceding claims, wherein heteroaromatic dicarboxylic acids, tricarboxylic acids and/or tetracarboxylic acids comprising at least one nitrogen, oxygen, sulfur or phosphorus atom in the aromatic, preferably pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid and/or benzoimidazole-5,6-dicarboxylic acid, are used as carboxylic acids.

10. A monomer bead which comprises one or more aromatic tetraamino compounds and one or more aromatic carboxylic acids and can be obtained by a process according to the preceding claims.

11. The monomer bead according to claim 10, wherein the ratio of the amino groups derived from the tetraamino compounds to the carboxylic acid groups derived from the aromatic carboxylic acids is in the range from 2.1:1 to 1.9:1.

12. The monomer bead according to claim 10 or 11, wherein the molar proportion of amide groups and/or imide groups based on the total number of all amino groups is less than 1:1.

13. The monomer bead according to claim 10, 11 or 12, having a number average degree of polymerization, measured by means of GPC, of less than 10.

14. The use of monomer beads according to claim 10, 11, 12 or 13 for producing a proton-conducting polymer membrane based on polyazoles.

15. A process for producing a proton-conducting polymer membrane based on polyazoles, which comprises the steps
A) Mixing of the monomer beads according to claim 10, 11, 12 or 13 with polyphosphoric acid to form a solution and/or dispersion,
B) Application of a layer to a support using the mixture according to step A),
C) Heating of the sheet-like structure/layer which can be obtained according to step B) to temperatures of up to 350°C, preferably up to 280°C, to form the polyazole polymer,
D) Treatment of the membrane formed in step C) in the presence of moisture at temperatures and for a time which are sufficient for the membrane to be self-supporting.

16. The process according to claim 15, wherein a polymer comprising recurring benzimidazole units of the formula 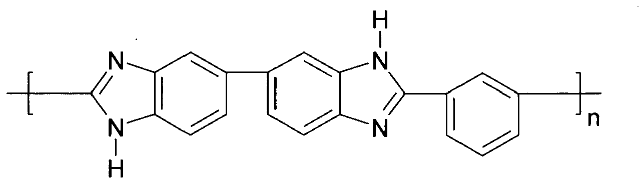 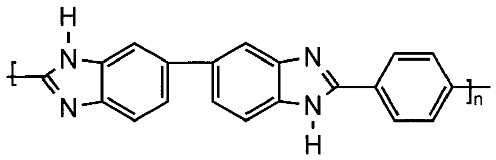 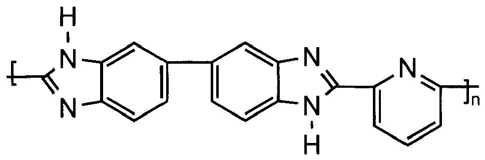 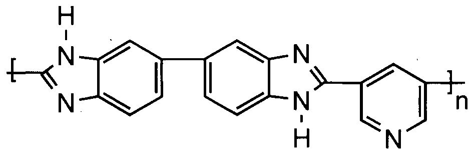 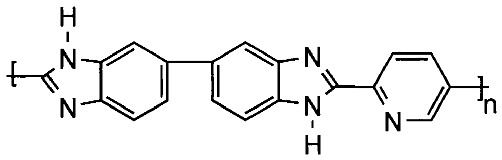 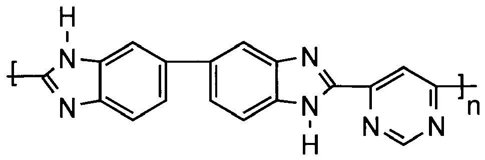 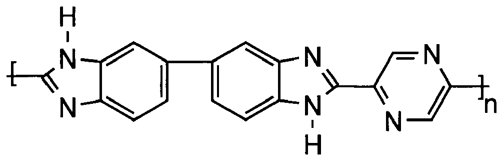 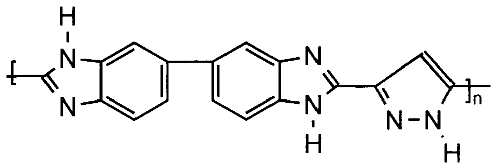 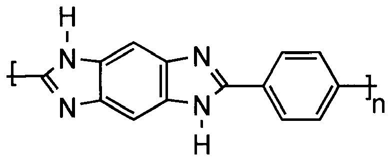 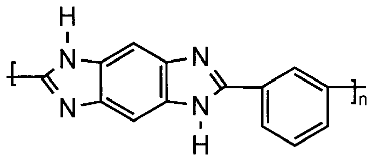 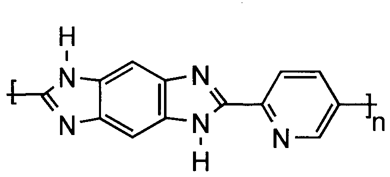 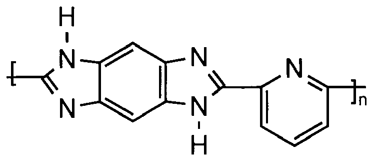 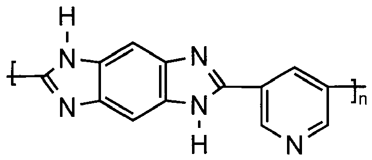 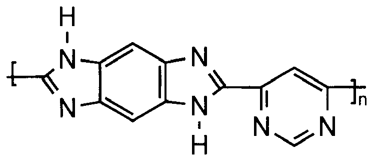 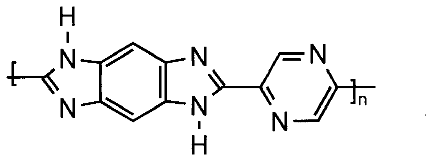 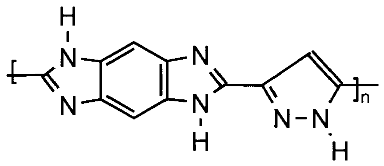 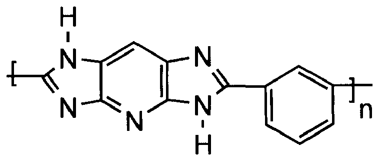 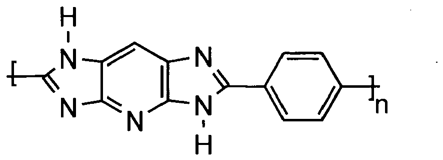 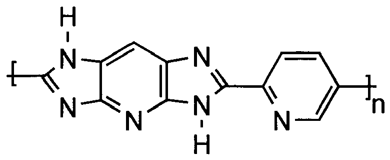 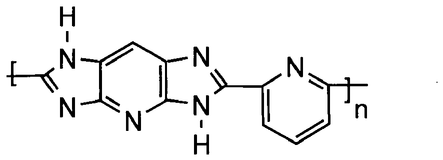 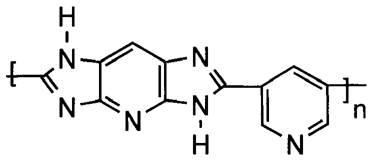 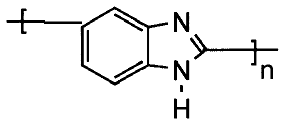 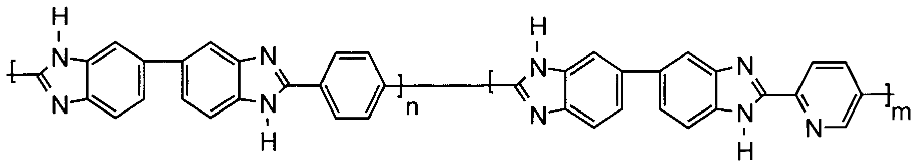 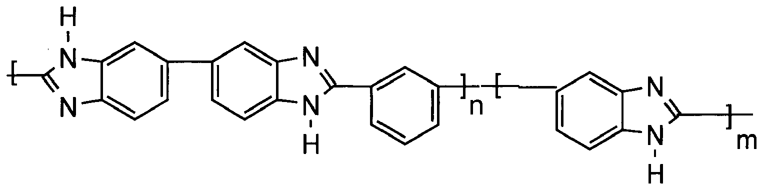 where n and m are each an integer greater than or equal to 10, preferably greater than or equal to 100, is formed in step C).

17. The process according to at least one of claims 15 and 16, wherein the viscosity is adjusted by addition of phosphoric acid after step B) and before step C).

18. The process according to at least one of claims 15 to 17, wherein the membrane produced according to step C) is treated in the presence of moisture at temperatures and for a time sufficient for the membrane to be self-supporting and be able to be detached without damage from the support.

19. The process according to at least one of claims 15 to 18, wherein an electrode is selected as support in step B) and the treatment according to step D) is carried out in such a way that the membrane formed is no longer self-supporting.

## Revendications

1. Procédé de fabrication de perles de monomères au cours duquel
i. Un ou plusieurs composés de tétramine et un ou plusieurs acides carboxyliques, qui contiennent au moins deux groupes acides par monomère d'acide carboxylique, sont mélangés dans une extrudeuse et fusionnés à des températures variant de 190 °C à 270 °C ;
ii. La masse fondue à une température variant de 190 °C à 270 °C s'égoutte par un orifice situé à la sortie de l'extrudeuse ;
iii. Les gouttelettes sont recueillies, refroidies et figées.

2. Procédé selon la revendication 1, **caractérisé en ce que** la période d'exposition moyenne du mélange de composés de tétramine et d'acides carboxyliques dans l'extrudeuse est plus petite que 10 minutes.

3. Procédé selon la revendication 1 ou 2, **caractérisé en ce que** le mélange est fusionné à une température de l'ordre de 200 °C à 250 °C.

4. Procédé selon au moins l'une des revendications précédentes, **caractérisé en ce que** la masse fondue s'égoutte en un liquide inerte, préférablement de l'huile minérale.

5. Procédé selon la revendication 4, **caractérisé en ce que** les perles figées sont nettoyées à l'aide d'un solvant inerte, préférablement du cyclohexane, pentane, hexane, heptane, benzol ou Toluol, puis séchés, préférablement à une température entre 25°C et 150 °C.

6. Procédé selon au moins l'une des revendications précédentes, **caractérisé en ce que** l'on utilise comme composés de tétramine aromatiques du 3,3',4,4'-tétraaminobiphényle, 2,3,5,6-tétraaminopyridine, 1,2,4,5-tétraaminobenzol, 3,3`,4,4`-tétraaminodiphénylsulfone, 3,3`,4,4`-tétraaminodiphényléther, 3,3`,4,4`-tétraaminobenzophénone, 3,3`,4,4`-tétraaminodiphénylméthane et/ou 3,3`,4,4`-tétraaminodiphényldiméthylméthane.

7. Procédé selon au moins l'une des revendications suivantes, **caractérisé en ce que** l'on utilise comme acides dicarboxyliques de l'acide isophtalique, acide téréphtalique, acide phtalique, 5-acide hydroxyisophtalique, 4-acide hydroxyisophtalique, 2-acide hydroxytéréphtalique, 2,5-acide dihydroxytéréphtalique, 2,5-acide dihydroxyisophtalique, 2,3-acide dihydroxyisophtalique, 2,3-acide dihydroxyphtalique, 2,4-acide dihydroxyphtalique, 3,4-acide dihydroxyphtalique, 3-acide fluorophtalique, 5-acide tétrafluoroisophtalique, 2-acide fluoroisphtalique, acide tétrafluorophtalique, acide tétrafluorisophtalique, acide tétrafluorotéréphtalique, 1,4-acide de naphtalène dicarboxylique, 1,5- acide de naphtalène dicarboxylique, 2,6- acide de naphtalène dicarboxylique, 2,7-acide de naphtalène dicarboxylique, acide diphénique, 1,8-dihydroxynaphatalène-3,6-acide dicarboxylique, diphényléther-4,4'-acide dicarboxylique, benzophénone-4,4'-acide dicarboxylique, sulfone de diphényl-4,4'-acide dicarboxylique, 4-acide trufluorométhylphtalique, 2,2-Bis(4-carboxyphényle)hexafluoropropane, 4,4'-acide stilbènedicarboxylique et /ou 4-acide carboxycinnamique.

8. Procédé selon la revendication 7, **caractérisé en ce que** le contenu en acides tricarboxyliques et/ou acides tétracarboxylique, relativement aux acides dicarboxyliques utilisés, varie entre 0,1 Mol % et 20 Mol %.

9. Procédé selon au moins l'une des revendications précédentes, **caractérisé en ce que** l'on utilise comme acides carboxyliques des acides dicarboxyliques hétéroaromatiques, acides tricarboxyliques et/ou acides tétracarboxylique, lesquels contiennent dans leurs combinaisons aromatiques au moins un atôme d'azote, oxygène, soufre ou phosphore, préférablement pyridine-2,5-acide dicarboxylique, 4-phényl-2,5-acide pyridinedicarboxylique, 3,5-acide pyrazole dicarboxylique, 2,6-acide pyrazole dicarboxylique,2,5-acide pyrazinedicarboxylique, 2,4,6-acide pyridinedicarboxylique et/ou benzimidazole-5,6-acide dicarboxylique.

10. Perles de monomères, comprenant un ou plusieurs composés de tétramine et un ou plusieurs acides carboxyliques aromatiques, pouvant être obtenu selon un procédé décrit dans les revendications précédentes.

11. Perles de monomères selon la revendication 10, **caractérisées en ce que** le rapport des groupes d'amines dérivés des composés de tétramine avec les groupes d'acides carboxyliques dérivés des acides carboxyliques aromatiques se situe entre 2,1:1 et 1,9:1.

12. Perles de monomères selon la revendication 10 ou 11, **caractérisées en ce que** la part molaire des groupes d'amides ou d'imides, relativement au nombre total de groupes d'amines, est plus petite que 1:1.

13. Perles de monomères selon la revendication 10 ou 11 ou 12, **caractérisées en ce qu'**elle présente un degré de polymérisation moyen en nombre, mesuré par GPC, plus petit que 10.

14. Utilisation de perles de monomères selon la revendication 10, 11, 12 ou 13 pour la fabrication d'une membrane de polymère conductrice de protons à base de polyazoles.

15. Procédé de fabrication d'une membrane de polymères conductrice de protons à base de polyazoles, comprenant les étapes suivantes :
A) Mélange des perles de monomères selon la revendication 10, 11, 12 ou 13 avec de l'acide polyphosphorique jusqu'à la formation d'une solution ou dispersion,
B) Formation d'une couche suivant l'utilisation du mélange selon l'étape A) sur un support,
C) Chauffage de l'étendue de la formation/couche obtenue selon l'étape B) à des températures pouvant atteindre 350 °C, préférablement 280 °C, jusqu'à la formation du polymère de polyazole,
D) Traitement de la membrane obtenue à l'étape C) en présence d'humidité à des températures et assez longtemps pour qu'elle soit autoporteuse.

16. Procédé selon la revendication 15, **caractérisé en ce que**, à l'étape C), un polymère contenant des unités de benzimidazole récurrentes de la formule 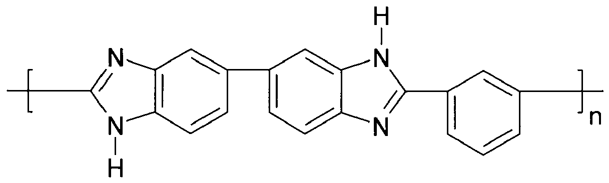 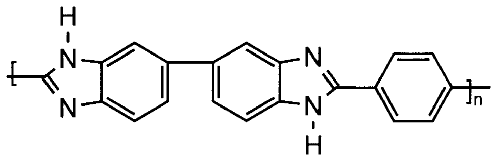 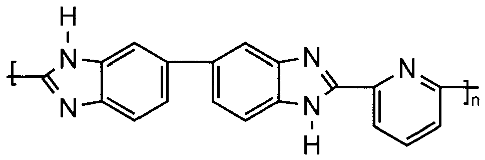 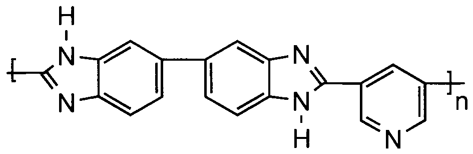 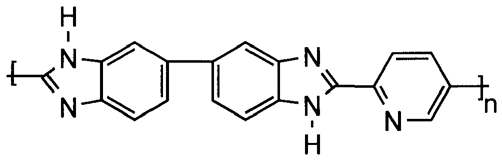 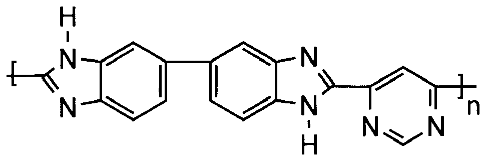 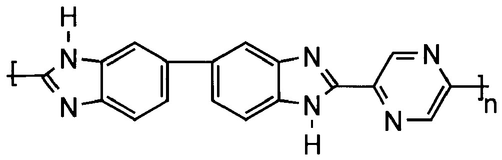 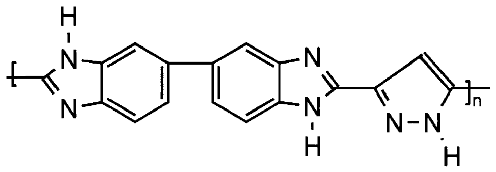 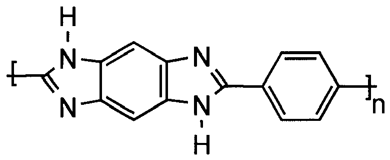 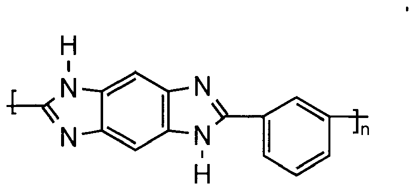 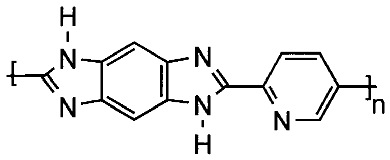 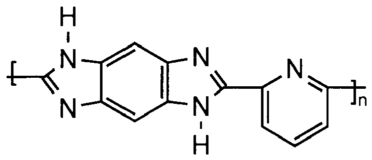 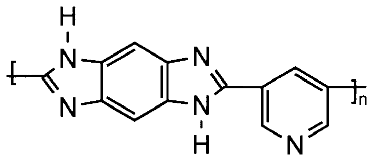 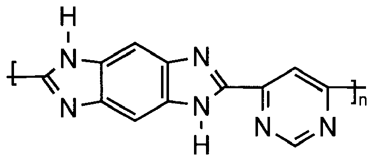 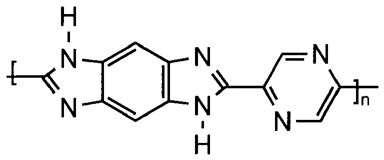 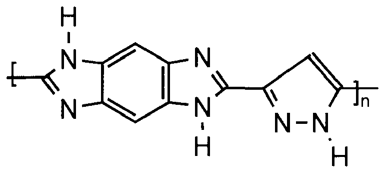 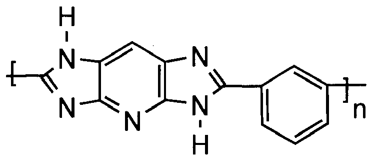 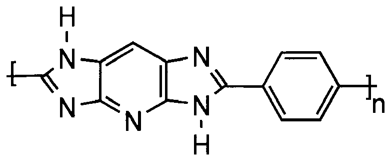 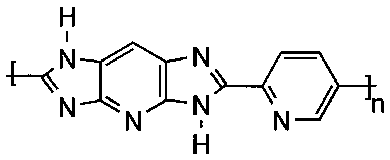 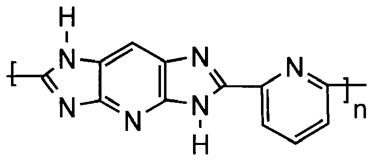 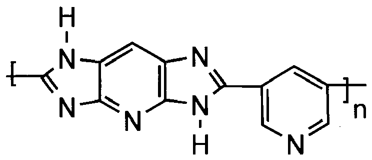 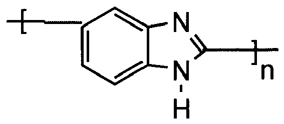 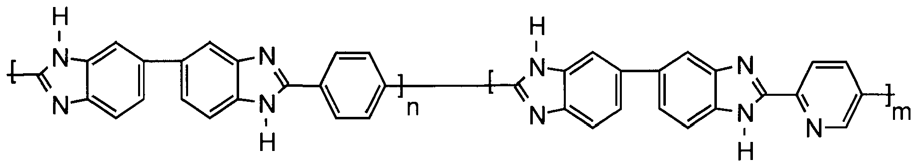 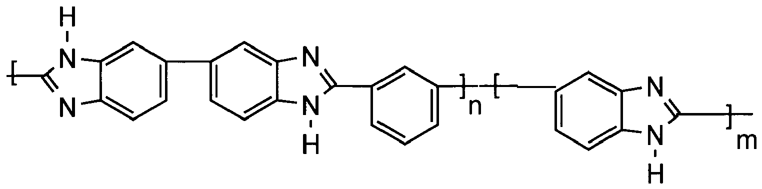 où n et m sont un nombre entier supérieur ou égal à 10, préférablement supérieur ou égal à 100, est formé.

17. Procédé selon au moins l'une des revendications 15 à 16, **caractérisé en ce que**, après l'étape B) mais avant l'étape C), la viscosité est réglée au moyen de l'ajout d'acide phosphorique.

18. Procédé selon au moins l'une des revendications 15 à 17, **caractérisé en ce que** la membrane obtenue selon l'étape C) est traitée en présence d'humidité, à des températures et pour une certaine durée, jusqu'à ce que la membrane soit autoporteuse et puisse être retirée du support sans en être endommagée.

19. Procédé selon au moins l'une des revendications 15 à 18, **caractérisé en ce que**, à l'étape B), une électrode est sélectionnée comme support et que le traitement est effectué de la manière présentée à l'étape D), de façon à ce que la membrane formée ne soit plus autoporteuse.
